# EUROPÄISCHE PATENTSCHRIFT

(11) **EP 1 193 919 B1**
(45) Veröffentlichungstag und Bekanntmachung des Hinweises auf die Patenterteilung: **02.05.2007**
(21) Anmeldenummer: 01120349.4
(22) Anmeldetag: 24.08.2001
(51) Int. Cl.: H04L 12/56, H04L 29/06

(54) **Verfahren zum Verbindungsaufbau von einem Endgerät eines Kommunikationsnetzes zu einem netzexternen Verbindungsziel und Einrichtungen zur Realisierung des Verfahrens**
Method for establishing a connection from a terminal of a communication network to a connection destination external to the network, and devices for implementing the method
Procédé pour établir une connection entre un terminal d'un réseau de communication et une destination de connection externe au réseau, et dispositifs pour la réalisation du procédé

(30) Priorität: 29.09.2000 DE 10048483
(43) Veröffentlichungstag der Anmeldung: 03.04.2002
(73) Patentinhaber: SIEMENS AKTIENGESELLSCHAFT, 80333 München (DE)
(72) Erfinder: Saller, Franz, 82061 Neuried (DE)

(56) Entgegenhaltungen:
- ATM FORUM: "Gateway for H.323 media transport over ATM, AF-SAA-0124.000" THE ATM FORUM, TECHNICAL COMMITTEE, [Online] Juli 1999 (1999-07), XP002261175 Gefunden im Internet: <URL:ftp://ftp.atmforum.com/pub/approved-s pecs/af-saa-0124.000.pdf> [gefunden am 2003-11-12]
- "ITU-T, H.323, PACKET BASED MULTIMEDIA COMMUNICATIONSSYSTEMS" ITU-T H.323, September 1999 (1999-09), Seiten 1-129, XP002166480
- THOM G A: "H. 323: THE MULTIMEDIA COMMUNICATIONS STANDARD FOR LOCAL AREA NETWORKS" IEEE COMMUNICATIONS MAGAZINE, IEEE SERVICE CENTER. PISCATAWAY, N.J, US, Bd. 34, Nr. 12, 1. Dezember 1996 (1996-12-01), Seiten 52-56, XP000636454 ISSN: 0163-6804
- ETSI: 'Telecommunications and Internet Protocol Harmonization Over Networks (TIPHON); Signalling for basic calls and inter domain calls, between an H.323 Terminal and a Terminal in a Switched-Circuit Network (SCN) Phase II: Scenario 1 + Scenario 2; TS 101 322' ETSI STANDARDS Bd. TIPHON-3, Nr. V100, Juli 1999, EUROPEAN TELECOMMUNICATIONS STANDARDS INSTITUTE, SOPHIA-ANTIPO, FR, XP014006046

## Beschreibung

In zeitgemäßen Kommunikationssystemen werden Verbindungen, z.B. zur Sprach-, Video- oder Multimedia-Kommunikation, in zunehmenden Maße auch über paketorientierte Kommunikationsnetze, wie z.B. Lokale Netze (LAN: Local Area Network) oder Weitverkehrsnetze (WAN: Wide Area Network), geführt. Auf dieser Technik basiert beispielsweise die sogenannte Internet-Telefonie, die häufig auch als "Voice over Internet Protocol" (VoIP) bezeichnet wird.

In solchen paketorientierten Kommunikationsnetzen werden zu übermittelnde Nutzdaten in einzelne Datenpakete aufgeteilt, die mit einer das jeweilige Verbindungsziel identifizierenden Transportadresse versehen werden. Anhand dieser Transportadresse werden die Datenpakete im Kommunikationsnetz weitgehend unabhängig voneinander zum jeweiligen Verbindungsziel vermittelt.

Häufig wird in paketorientierten Kommunikationsnetzen eine zentrale Verbindungssteuerung eingesetzt. Eine solche Verbindungsteuerung verwaltet in der Regel einen Auf- und Abbau von Verbindungen, sichert für aufgebaute Verbindungen eine vorgegebene Dienstgüte (Quality of Service), schützt gegen unbefugte Benutzung und erlaubt eine Nutzung von Leistungsmerkmalen, wie z.B. Rufweiterleitung oder Proxy-Funktionalität.

Aus der ITU-T-Empfehlung H.323 ist ein paketorientiertes Kommunikationsnetz bekannt, in dem als Verbindungssteuerung ein sogenannter Gatekeeper zum Steuern und Verwalten aller Echtzeit-Multimedia-Verbindungen innerhalb des Kommunikationsnetzes oder eines Teilnetzes des Kommunikationsnetzes vorgesehen ist. Um von einem durch einen ersten Gatekeeper verwalteten, ersten Kommunikationsnetz eine Verbindung in ein durch einen zweiten Gatekeeper verwaltetes, zweites Kommunikationssystem aufzubauen, ist gemäß dem bisherigen Stand der Technik eine Signalisierung zwischen dem ersten und dem zweiten Gatekeeper erforderlich. Eine solche Signalisierung zwischen verschiedenen Gatekeepern erfordert jedoch einen hohen Implementierungsaufwand, insbesondere wenn sich zwischen dem ersten und dem zweiten Kommunikationsnetz noch ein oder mehrere weitere, paketorientierte Kommunikationsnetze befinden. Ein typisches Beispiel für eine derartige Anordnung sind an verschiedenen Firmensitzen befindliche Lokale Netze, die über das Internet gekoppelt sind.

Ein weiterer Mangel des bekannten gatekeepergesteuerten Kommunikationsnetzes ist darin zu sehen, dass vom ersten Kommunikationsnetz nur Verbindungen zu Kommunikationsnetzen aufgebaut werden können, die ebenfalls von einem Gatekeeper verwaltet werden. Die Wahl eines Verbindungsziels ist damit stark eingeschränkt.

Aus der Druckschrift The ATM Forum: "Gateway for H.323 Media Transport over ATM", XP002261175 ist ein Verfahren zum Verbindungsaufbau von einem ersten Nicht-ATM-Netzwerk über ein ATM-Netzwerk zu einem zweiten Nicht-ATM-Netzwerk bekannt. Demgemäss wird eine Gatewayeinrichtung des ersten Nicht-ATM-Netzwerkes die Verbindung mit Hilfe einem Gatekeeper des ATM-Netzwerkes aufbauen.

Es ist Aufgabe der vorliegenden Erfindung ein Verfahren zum Verbindungsaufbau von einem netzinternen Endgerät eines paketorientierten Kommunikationsnetzes mit einer netzinternen Verbindungssteuerung zu einem netzexternen Verbindungsziel anzugeben, bei dem keine aufwendige Signalisierung zwischen der netzinternen und einer netzexternen Verbindungssteuerung erforderlich ist. Es ist weiterhin Aufgabe der Erfindung, ein paketorientiertes Kommunikationsnetz sowie eine Gatewayeinrichtung zur Realisierung des erfindungsgemäßen Verfahrens anzugeben.

Gelöst wird diese Aufgabe durch ein Verfahren mit den Merkmalen des Patenanspruchs 1, durch ein paketorientiertes Kommunikationsnetz mit den Merkmalen des Patenanspruchs 6, sowie durch eine Gatewayeinrichtung mit den Merkmalen des Patentanspruchs 11.

Die Erfindung erlaubt es, eine Verbindung, z.B. zur Sprach-, Video- oder Multimedia-Kommunikation, von einem netzinternen Endgerät eines paketorientierten Kommunikationsnetzes, dessen netzinterne Verbindungen von einer Verbindungssteuerung verwaltet werden, zu einem netzexternen Verbindungsziel aufzubauen. Der Verbindungsaufbau erfolgt dabei über eine Gatewayeinrichtung des Kommunikationsnetzes. Das netzexterne Verbindungsziel kann z.B. ein weiteres Endgerät, ein weiteres Kommunikationsnetz oder Teilnetz oder eine weitere Gatewayeinrichtung zu einem weiteren Kommunikationsnetz sein. Die Begriffe netzintern und netzextern beziehen sich in diesem Zusammenhang auf den Bereich innerhalb bzw. außerhalb des paketorientierten Kommunikationsnetzes.

Ein wesentlicher Vorteil der Erfindung besteht darin, dass zum Aufbau einer Verbindung keine zusätzliche Signalisierung zwischen zentralen Verbindungssteuerungen unterschiedlicher Kommunikationsnetze erforderlich ist. Daher ist in der Verbindungssteuerung auch keine aufwendige Schnittstelle zu netzexternen Verbindungssteuerungen notwendig. Dessen ungeachtet können die Möglichkeiten des Datenpakettransports eines zum Verbindungsziel weiterführenden Kommunikationsnetzes in vollem Maße genutzt werden. Darüber hinaus können auch Verbindungen zu Verbindungszielen aufgebaut werden, die von keiner Verbindungssteuerung kontrolliert werden.

Vorteilhafte Ausführungsformen und Weiterbildungen der Erfindung sind in den abhängigen Ansprüchen angegeben.

Gemäß einer vorteilhaften Weiterbildung des erfindungsgemäßen Verfahrens kann sich die Gatewayeinrichtung bei der Verbindungssteuerung unter einer oder mehreren, ein oder mehrere netzexterne Verbindungsziele identifizierenden logischen Adressinformationen als netzinternes Verbindungsziel registrieren. Auf dies Weise kann eine Adresstabelle für netzinterne Verbindungsziele der Verbindungssteuerung automatisch aktualisiert werden. Somit ist zur Verwaltung mehrerer verschiedener netzexterner Verbindungsziele nur ein Administrieren der Gatewayeinrichtung erforderlich.

Weiterhin kann die logische Adressinformation, die beispielsweise eine Vorwahlnummer, Servicenummer und/oder eine Endgeräterufnummer umfassen kann, über das weiterführende Kommunikationsnetz zum netzexternen Verbindungsziel übertragen werden. Sofern das Verbindungsziel ein weiteres Kommunikationsnetz ist, kann die Verbindung zum weiteren Kommunikationsnetz anhand der logischen Adressinformation oder eines Teiles davon, zu einem dadurch adressierten Zielendgerät des weiteren Kommunikationsnetzes weitergeführt werden.

Gemäß einer weiteren vorteilhaften Ausführungsform der Erfindung kann die zentrale Verbindungssteuerung durch einen Gatekeeper gemäß der ITU-Empfehlung H.323 realisiert sein.

Weiterhin kann die Gatewayeinrichtung eine Zugangskontrolleinrichtung aufweisen, um diejenigen aus dem weiterführenden Kommunikationsnetz eintreffenden Verbindungsanforderungen abzulehnen, deren jeweiliger Ursprung in der Gatewayeinrichtung nicht als netzexternes Verbindungsziel registriert ist. Entsprechend können die netzexternen Verbindungsziele, die in der Gatewayeinrichtung registriert sind, als zulässige Verbindungspartner aufgefaßt werden, von denen eine eintreffende Verbindungsanforderung akzeptiert wird.

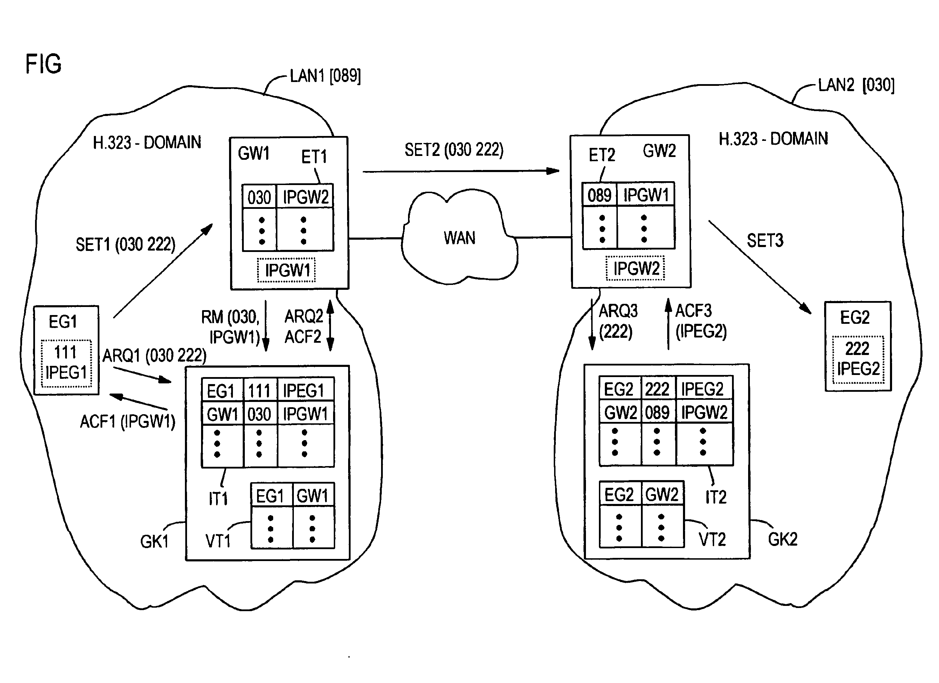

Ein Ausführungsbeispiel der Erfindung wird nachfolgend anhand der Zeichnung näher erläutert.
Die Figur zeigt in schematischer Darstellung zwei über ein Weitverkehrsnetz gekoppelte Kommunikationsnetze beim Aufbau einer Verbindung.

In der Figur sind zwei als Lokale Netze ausgebildete Kommunikationsnetze LAN1 und LAN2 schematisch dargestellt, die über ein Weitverkehrsnetz WAN, z.B. das Internet, gekoppelt sind.

Die Lokalen Netze LAN 1 und LAN2 und das Weitverkehrsnetz WAN unterstützen jeweils einen paketorientierten Datentransport. Im vorliegenden Ausführungsbeispiel basiert die Datenpaketübertragung in den Lokalen Netzen LAN1 und LAN2 und im Weitverkehrsnetz WAN jeweils auf dem sogenannten Internet-Protokoll (IP), bei dem Datenpakete anhand einer in diesen enthaltenen IP-Transportadresse durch das jeweilige Kommunikationsnetz LAN1, LAN2 bzw. WAN vermittelt werden.

Für das vorliegende Ausführungsbeispiel sei angenommen, dass sich das Lokale Netz LAN1 im Vorwahlbezirk von München mit der öffentlichen Vorwahlnummer 089 und das Lokale Netz LAN2 im Vorwahlbezirk von Berlin mit der öffentlichen Vorwahlnummer 030 befindet. Dementsprechend ist dem Lokalen Netz LAN1 die Vorwahlnummer 089 und dem Lokalen Netz LAN2 die Vorwahlnummer 030 logisch zugeordnet.

Die Lokalen Netze LAN1 und LAN2 bilden jeweils eine sogenannte H.323-Domäne gemäß der ITU-T-Empfehlung H.323. In jedem der Lokalen Netze LAN1 und LAN2 ist gemäß der H.323-Empfehlung ein sogenannter Gatekeeper GK1 bzw. GK2 als Verbindungssteuerung vorgesehen. Die Gatekeeper GK1 und GK2 sind jeweils für ein Steuern und Verwalten aller innerhalb der jeweiligen H.323-Domäne LAN1 bzw. LAN2 aufzubauenden Verbindungen zuständig. Insbesondere dienen die Gatekeeper GK1 und GK2 in ihrer jeweiligen H.323-Domäne zur Zugangskontrolle sowie zur Adressauflösung von logischen Adressinformationen in IP-Transportadressen für alle in der jeweiligen H.323-Domäne befindlichen Endgeräte und Gatewayeinrichtungen. Im vorliegenden Ausführungsbeispiel verwalten die Gatekeeper GK1 und GK2 jeweils ausschließlich Kommunikationseinrichtungen, die sich innerhalb der eigenen H.323-Domäne LAN1 bzw. LAN2 befinden.

Die Gatekeeper GK1 und GK2 weisen jeweils eine Adresstabelle IT1 bzw. IT2 und eine Verbindungstabelle VT1 bzw. VT2 für netzinterne Verbindungen, d.h. Verbindungen innerhalb des jeweiligen Lokalen Netzes LAN1 bzw. LAN2 auf. In den Verbindungstabellen VT1 und VT2 sind jeweils die Endpunkte von netzinternen Verbindungen einander zugeordnet eingetragen. In den Adresstabellen IT1 und IT2 sind den vom jeweiligen Gatekeeper GK1 bzw. GK2 verwalteten Kommunikationseinrichtungen jeweils eine logische Adressinformation sowie eine netzinterne Transportadresse zugeordnet.

Die Lokalen Netze LAN1 und LAN2 weisen ferner jeweils eine Gatewayeinrichtung GW1 bzw. GW2 auf, über die das betreffende Lokale Netz LAN1 bzw. LAN2 an das Weitverkehrsnetz WAN angekoppelt ist.

Den Gatewayeinrichtungen GW1 und GW2 ist im vorliegenden Ausführungsbeispiel jeweils eine IP-Adresse IPGW1 bzw. IPGW2 zugeordnet, über die die betreffende Gatewayeinrichtung GW1 bzw. GW2 sowohl für aus dem eigenen Lokalen Netz LAN1 bzw. LAN2 als auch für aus dem Weitverkehrsnetz WAN stammende Datenpakete erreichbar ist. Nach einer alternativen Ausführungsform kann vorgesehen sein, dass mindestens eine der Gatewayeinrichtungen GW1 und GW2 im eigenen Lokalen Netz LAN1 bzw. LAN2 über eine andere IP-Adresse als im Weitverkehrsnetz WAN adressiert wird.

Die Gatewayeinrichtungen GW1 und GW2 verfügen jeweils über eine Adresstabelle ET1 bzw. ET2 für netzexterne Verbindungen, d.h. für Verbindungen außerhalb der Lokalen Netze LAN1 bzw. LAN2. In den Adresstabellen ET1 und ET2 sind netzexterne Verbindungsziele identifizierende, logische Adressinformationen jeweils einer netzextern, d.h. im Weitverkehrsnetz WAN gültigen Transportadresse zugeordnet.

Im vorliegenden Ausführungsbeispiel ist in der Adresstabelle ET1 der Gatewayeinrichtung GW1 der Vorwahlnummer 030, die als logische Adressinformation das lokale Netz LAN2 bzw. die Gatewayeinrichtung GW2 identifiziert, die IP-Adresse IPGW2 der Gatewayeinrichtung GW2 zugeordnet. Entsprechend ist in der Adresstabelle ET2 der das Lokale Netz LAN1 identifizierenden Vorwahlnummer 089 die IP-Adresse IPGW1 der Gatewayeinrichtung GW1 zugeordnet.

Weiterhin ist in den Lokalen Netzen LAN1 und LAN2 jeweils ein Endgerät EG1 bzw. EG2 enthalten. Dem Endgerät EG1 ist als logische Adreßinformation eine Endgeräterufnummer 111 und als netzintern gültige Transportadresse eine IP-Adresse IPEG1 zugeordnet. Entsprechend ist dem Endgerät EG2 eine Endgeräterufnummer 222 als logische Adressinformation sowie eine IP-Adresse IPEG2 als im lokalen Netz LAN2 gültige Transportadresse zugeordnet. In der Adresstabelle IT1 des Gatekeepers GK1 ist das Endgerät EG1 seiner Endgeräterufnummer 111 und seiner IP-Adresse IPEG1 zugeordnet. Entsprechend ist in der Adresstabelle IT2 des Gatekeepers GK2 das Endgerät EG2 seiner Endgeräterufnummer 222 und seiner IP-Adresse IPEG2 zugeordnet. Die Endgeräte EG1 und EG2 können z.B. durch Sprach-, Video- und/oder Multimedia-Endgeräte sowie insbesondere durch Personalcomputer realisiert sein.

Vorzugsweise registrieren sich die Gatewayeinrichtungen GW1 und GW2, z.B. nach einer Änderung der jeweiligen Adresstabelle ET1 bzw. ET2 oder nach einem Systemstart, beim jeweiligen Gatekeeper GK1 bzw. GK2 als netzinternes Verbindungsziel unter der jeweiligen netzexternen Vorwahlnummer 030 bzw. 089. Die Gatewayeinrichtung GW1 beispielsweise übermittelt zu diesem Zweck eine Registrierungsmeldung RM mit der Vorwahlnummer 030 des Vorwahlbereichs des lokalen Netzes LAN2 sowie ihre eigene IP-Adresse IPGW1 zum Gatekeeper GK1. Der Gatekeeper GK1 ordnet infolgedessen der Gatewayeinrichtung GW1 die Vorwahlnummer 030 als logische Adressinformation und die IP-Adresse IPGW1 als netzinterne Transportadresse zu. Seitens des Gatekeepers GK1 wird die Vorwahlnummer 030 als netzintern gültige logische Adressinformation der Gatewayeinrichtung GW1 behandelt. Sofern in der Gatewayeinrichtung GW1 mehrere externe Kommunikationsnetze unter einer jeweiligen Vorwahlnummer registriert sind, werden der Gatewayeinrichtung GW1 in der Adresstabelle IT2 entsprechend mehrere Vorwahlnummern als netzinterne logische Adressinformationen zugeordnet.

In analoger Weise werden von der Gatewayeinrichtung GW2 eine oder mehrere Registrierungsmeldungen (nicht dargestellt) zum Gatekeeper GK2 übermittelt. Infolgedessen werden der Gatewayeinrichtung GW2 in der Adresstabelle IT2 die IP-Adresse IPGW2 als netzinterne Transportadresse sowie die Vorwahlnummer 089 und gegebenenfalls weitere Vorwahlnummern als netzinterne logische Adressinformationen zugeordnet.

Im Folgenden wird ein Aufbau einer Verbindung vom Endgerät EG1 des Lokalen Netzes LAN1 zum Endgerät EG2 des Lokalen Netzes LAN2 betrachtet. Der Verbindungsaufbau wird am Endgerät EG1 durch Eingabe der Vorwahlnummer 030, die den Vorwahlbezirk des Zielnetzes LAN2 identifiziert, und der Endgeräterufnummer 222 initiiert. Die Vorwahlnummer 030 bildet hierbei die logische Adressinformation hinsichtlich des Zielnetzes LAN2 bzw. dessen Gatewayeinrichtung GW2. Sinngemäß bildet die Endgeräterufnummer 222 die logische Adressinformation hinsichtlich des Zielendgerätes EG2 innerhalb des Zielnetzes LAN2.

Im Rahmen einer Verbindungsanforderung sendet das Endgerät EG1 eine Zugangsanfragemeldung ARQ1 (Admission Request) mit der eingegebenen Vorwahlnummer 030 und der eingegebenen Endgeräterufnummer 222 zum Gatekeeper GK1. Der Gatekeeper GK1 durchsucht daraufhin seine Adresstabelle IT1 nach einer logischen Adressinformation, die zumindest mit einem ersten Teil der übermittelten logischen Adressinformationen 030 222 übereinstimmt. Im vorliegenden Ausführungsbeispiel stimmt die logische Adressinformation unter der die Gatewayeinrichtung GW1 beim Gatekeeper GK1 registriert ist, mit der übermittelten Vorwahlnummer 030 überein. Die Gatewayeinrichtung GW1 wird damit vom Gatekeeper GK1 als Verbindungsziel ermittelt. Infolgedessen wird vom Gatekeeper GK1 eine Anfragebestätigungsmeldung ACF1 (Admission Confirmation) mit der der Gatewayeinrichtung GW1 in der Adresstabelle IT1 zugeordneten IP-Adresse IPGW1 zum Endgerät EG1 übermittelt.

Nach alternativen Ausführungsformen des Verbindungsaufbaus kann vom Endgerät EG1 anstelle der Vorwahlnummer 030 und der Endgeräterufnummer 222 z.B. eine das Endgerät EG2 identifizierende Aliasadresse, Email-Adresse oder URL (Uniform Resource Locator) als logische Adressinformation zum Gatekeeper GK1 übermittelt werden. Sofern einer derartigen logischen Adressinformation in der Adresstabelle IT1 eine IP-Transportadresse zugeordnet ist, wird diese IP-Transportadresse in der Anfragebestätigungsmeldung ACF1 zum Endgerät EG1 übertragen.

Anhand der übermittelten IP-Adresse IPGW1 wird vom Endgerät EG1 eine Verbindungsaufbaumeldung SET1 (Setup) gemäß H.323-Empfehlung mit der Vorwahlnummer 030 und der Endgeräterufnummer 222 zur Gatewayeinrichtung GW1 übertragen. Die Gatewayeinrichtung GW1 übermittelt daraufhin eine Zugangsanfragemeldung ARQ2 zum Gatekeeper GK1 und nimmt nach Empfang einer Anfragebestätigungsmeldung ACF2 die vom Endgerät EG1 angeforderte Verbindung gemäß H.323-Empfehlung an.

Die netzinterne Verbindung zwischen dem Endgerät EG1 und der Gatewayeinrichtung GW1 wird in der Verbindungstabelle VT1 des Gatekeepers GK1 registriert. Hierbei werden das Endgerät EG1 und die Gatewayeinrichtung GW1 in der Verbindungstabelle VT1 einander zugeordnet.

Die vom Endgerät EG1 übermittelte Vorwahlnummer 030 ist in der Adresstabelle ET1 der Gatewayeinrichtung GW1 einer netzexternen Transportadresse IPGW2 zugeordnet. Daran erkennt die Gatewayeinrichtung GW1, dass die Verbindung über das Weitverkehrsnetz WAN weiterzuführen ist. Da die Weiterführung der Verbindung durch den Gatekeeper GK1 aufgrund seiner beschränkten Zuständigkeit nicht steuerbar ist, und der Gatekeeper GK1 Verbindungen, deren Zieladressinformation er nicht selbst auflösen kann, nicht zulassen würde, übermittelt die Gatewayeinrichtung GW1 für die Weiterführung der Verbindung keine Zugangsanfragemeldung zum Gatekeeper GK1. Die Gatewayeinrichtung GW1 verbirgt somit gewissermaßen die Weiterführung der Verbindung vor dem Gatekeeper GK1.

Zur Weiterführung der Verbindung ermittelt die Gatewayeinrichtung GW1 die der Vorwahlnummer 030 in der Adresstabelle ET1 zugeordnete IP-Adresse IPGW2, mittels der die Gatewayeinrichtung GW2 im Weitverkehrsnetz WAN adressiert wird. Die Gatewayeinrichtung GW2 fungiert damit hinsichtlich der Vorwahlnummer 030 als Verbindungsziel. Anhand der IP-Adresse IPGW2 wird von der Gatewayeinrichtung GW1 eine Verbindungsaufbaumeldung SET2 gemäß H.323-Empfehlung mit der Vorwahlnummer 030 und der Endgeräterufnummer 222 zur Gatewayeinrichtung GW2 übermittelt. Die Gatewayeinrichtung GW2 erkennt, dass die Absender-IP-Adresse IPGW1 der die Verbindungsaufbaumeldung SET2 transportierenden Datenpakete in der Adreßtabelle ET2 enthalten ist und nimmt infolgedessen die Verbindung an. Die Gatewayeinrichtung GW1 wird dadurch von der Gatewayeinrichtung GW2 als sogenannter "Trusted Gateway" akzeptiert. Da die Verbindung aus einem externen Kommunikationsnetz (WAN) eintrifft, wird die Verbindung ohne eine Rückfrage an den Gatekeeper GK2 angenommen.

Die Gatewayeinrichtungen GW1 und GW2 werden damit jeweils in Richtung zum Weitverkehrsnetz WAN in einem gatekeeperlosen H.323-Betriebsmodus und simultan dazu in Richtung zum jeweiligen Lokalen Netz LAN1 bzw. LAN2 in einem gatekeepergesteuerten H.323-Betriebsmodus betrieben.

Die Gatewayeinrichtung GW2 entfernt aus der übermittelten logischen Adressinformation 030 222 die Vorwahlnummer 030 und übermittelt eine Zugangsanfragemeldung ARQ3 mit der verbleibenden Endgeräterufnummer 222 zum Gatekeeper GK2. Der Gatekeeper GK2 interpretiert dies als Anforderung einer Verbindung von der Gatewayeinrichtung GW2 zu einem durch die logische Adressinformation 222 identifizierten Endgerät. Anhand der Adresstabelle IT2 ermittelt der Gatekeeper GK2, dass der logischen Adressinformation 222 das Endgerät EG2 mit der IP-Adresse IPEG2 zugeordnet ist. Infolgedessen übermittelt der Gatekeeper GK2 eine Anfragebestätigungsmeldung ACF3 mit der IP-Adresse IPEG2 des Endgerätes EG2 zur Gatewayeinrichtung GW2. Anhand der übermittelten IP-Adresse IPGW2 sendet die Gatewayeinrichtung GW2 eine Verbindungsaufbaumeldung SET3 gemäß H.323-Empfehlung zum Endgerät EG2, wodurch ein netzinterner Verbindungsaufbau zwischen der Gatewayeinrichtung GW2 und dem Endgerät EG2 veranlasst wird. Die aufgebaute netzinterne Verbindung wird in der Verbindungstabelle VT2 des Gatekeepers GK2 registriert. Das Endgerät EG2 und die Gatewayeinrichtung GW2 werden dazu in der Verbindungstabelle VT2 einander zugeordnet abgespeichert. Über die zwischen der Gatewayeinrichtung GW2 und dem Endgerät EG2 aufgebaute netzinterne Verbindung wird schließlich die vom Endgerät EG1 kommende Verbindung zum Endgerät EG2 durchgeschaltet.

Auf diese Weise wird eine Verbindung zwischen Endgeräten EG1 und EG2 verschiedener, über ein Weitverkehrsnetz WAN gekoppelter H.323-Domänen LAN1 und LAN2 hergestellt, ohne dass eine Signalisierung zwischen den zuständigen Gatekeepern GK1 und GK2 notwendig wäre.

Die Erfindung erfordert keine Modifikation der zu verbindenden Endgeräte, so dass beliebige Endgeräte gemäß H.323-Empfehlung eine domänenübergreifende H.323-Verbindung über das Internet-Protokoll als Transportschicht aufbauen können. Hierbei werden logische Adressinformationen, wie Vorwahlnummern und Endgeräterufnummern, die einer anderen Kommunikationsschicht als die verwendeten IP-Transportadressen angehören, als Zugangsinformation zu Gatewayeinrichtungen netzexterner H.323-Domänen genutzt.

Ein wesentlicher Vorteil der Erfindung besteht darin, dass in einem Gatekeeper GK1, GK2 keine Endgeräte externer H.323-Domänen zu administrieren sind. Die Administration externer Domänen beschränkt sich vielmehr auf das Eintragen der logischen Adressinformationen 030, 089 und der Transportadressen IPGW2, IPGW1 zu den Gatewayeinrichtungen GW2, GW1 der externen Domänen in die Adresstabelle ET1, ET2 der jeweiligen - netzinternen Gatewayeinrichtung GW1 bzw. GW2.

## Patentansprüche

1. Verfahren zum Verbindungsaufbau gemäß ITU-T-Empfehlung H.323 von einem netzinternen Endgerät (EG1) eines paketorientierten Kommunikationsnetzes (LAN1) zu einem netzexternen Verbindungsziel (GW2), bei dem
a) eine Gatewayeinrichtung (GW1) des Kommunikationsnetzes (LAN1) in einer zum Steuern und Verwalten von netzinternen Verbindungen vorgesehenen, zentralen Verbindungssteuerung (GK1) des Kommunikationsnetzes (LAN1) unter einer das netzexterne Verbindungsziel (GW2) identifizierenden, logischen Adressinformation als netzinternes Verbindungsziel registriert wird, und das externe Verbindungsziel (GW2) in der Gatewayeinrichtung (GW1) unter dieser Adressinformation als netzexternes Verbindungsziel registriert wird,
b) durch das Endgerät (EG1) die das netzexterne Verbindungsziel (GW2) identifizierende Adressinformation zur Verbindungssteuerung (GK1) übermittelt wird,
c) durch die Verbindungssteuerung (GK1) anhand der übermittelten Adressinformation die Gatewayeinrichtung (GW1) als Verbindungsziel ermittelt wird,
d) eine durch die Verbindungssteuerung (GK1) kontrollierte Verbindung zwischen dem Endgerät (EG1) und der Gatewayeinrichtung (GW1) aufgebaut wird,
e) durch das Endgerät (EG1) die Adressinformation zur Gatewayeinrichtung (GW1) übertragen wird,
f) durch die Gatewayeinrichtung (GW1) eine der übertragenen Adressinformation in der Gatewayeinrichtung (GW1) zugeordnete, das netzexterne Verbindungsziel (GW2) in einem weiterführenden, paketorientierten Kommunikationsnetz (WAN) adressierende, netzextern gültige Transportadresse (IPGW2) ermittelt wird, und
g) die Verbindung anhand der netzextern gültigen Transportadresse (IPGW2) über das weiterführende Kommunikationsnetz (WAN) zum externen Verbindungsziel (GW2)

2. Verfahren nach Anspruch 1,
**dadurch gekennzeichnet,**
**dass** durch die Verbindungssteuerung (GK1) eine der übermittelten logischen Adressinformation (030) zugeordnete, die Gatewayeinrichtung (GW1) adressierende, netzintern gültige Transportadresse (IPGW1) zum Endgerät (EG1) übertragen wird, und
**dass** das Endgerät (EG1) die Verbindung zur Gatewayeinrichtung (GW1) anhand der netzintern gültigen Transportadresse (IPGW1) initiiert.

3. Verfahren nach einem der vorhergehenden Ansprüche,
**dadurch gekennzeichnet,**
**dass** die Gatewayeinrichtung (GW1) sich bei der Verbindungssteuerung (GK1) unter der das netzexterne Verbindungsziel (GW2) identifizierenden, logischen Adressinformation (030) als netzinternes Verbindungsziel registriert.

4. Verfahren nach einem der vorhergehenden Ansprüche,
**dadurch gekennzeichnet ,**
**dass** die logische Adressinformation (030) über das weiterführende Kommunikationsnetz zum netzexternen Verbindungsziel (GW2) übertragen wird.

5. Verfahren nach einem der vorhergehenden Ansprüche,
**dadurch gekennzeichnet,**
**dass** die Gatewayeinrichtung (GW1) gegenüber der Verbindungssteuerung (GK1) simuliert, Ziel der aufzubauenden Verbindung zu sein. weitergeführt wird.

6. Paketorientiertes Kommunikationsnetz (LAN1) mit
- einer zentralen Verbindungssteuerung (GK1) gemäß ITU-T-Empfehlung H.323 zum Steuern und Verwalten von netzinternen Verbindungen, und zum Umsetzen von netzinterne Verbindungsziele (EG1) identifizierenden, logischen Adressinformationen (111) in netzintern gültige Transportadressen (IPEG1) zum Transport von Datenpaketen innerhalb des Kommunikationsnetzes (LAN1), und
- einer an ein weiterführendes Kommunikationsnetz (WAN) anschließbaren Gatewayeinrichtung (GW1) gemäß ITU-T-Empfehlung H.323 zum Umsetzen von netzexterne Verbindungsziele (GW2) identifizierenden, logischen Adressinformationen in netzextern gültige Transportadressen (IPGW2) zum Transport von Datenpaketen über das weiterführende Kommunikationsnetz (WAN), ,
**dadurch gekennzeichnet**
- **dass** die Gatewayeinrichtung (GW1) in der Verbindungssteuerung (GK1) unter einer ein netzexternes Verbindungsziel (GW2) identifizierenden, logischen Adressinformation als netzinternes Verbindungsziel registriert ist, und
- **dass** das externe Verbindungsziel (GW2) in der Gatewayeinrichtung (GW1) unter dieser logischen Adressinformation als netzexternes Verbindungsziel registriert ist.

7. Paketorientiertes Kommunikationsnetz nach Anspruch 6,
**dadurch gekennzeichnet,**
**dass** die zentrale Verbindungssteuerung (GK1) durch einen Gatekeeper gemäß der ITU-T-Empfehlung H.323 realisiert ist.

8. Paketorientiertes Kommunikationsnetz nach Anspruch 6 oder 7,
**dadurch gekennzeichnet**
**dass** die logische Adressinformation (030) eine Vorwahlnummer, Servicenummer und/oder eine Endgeräterufnummer umfasst.

9. Paketorientiertes Kommunikationsnetz nach einem der Ansprüche 6 bis 8,
**dadurch gekennzeichnet**
**dass** die netzintern gültigen und/oder die netzextern gültigen Transportadressen (IPEG1, IPGW1, IPGW2, IPEG2) auf dem Internet-Protokoll basieren.

10. Paketorientiertes Kommunikationsnetz nach einem der Ansprüche 6 bis 9,
**dadurch gekennzeichnet**
**dass** die Gatewayeinrichtung (GW1) eine Zugangskontrolleinrichtung aufweist zum Ablehnen von denjenigen aus dem weiterführenden Kommunikationsnetz (WAN) eintreffenden Verbindungsanforderungen, deren jeweiliger Ursprung in der Gatewayeinrichtung (GW1) nicht als netzexternes Verbindungsziel registriert ist.

11. Gatewayeinrichtung (GW1) mit einer ersten Schnittstelle gemäß ITU-T-Empfehlung H.323 zu einem gatekeepergesteuerten, ersten paketorientierten Kommunikationsnetz (LAN1) und einer zweiten Schnittstelle gemäß H.323-Empfehlung zu einem zweiten paketorientierten Kommunikationsnetz (WAN), wobei die Gatewayeinrichtung (GW1) zum Umsetzen einer logischen Adressinformation, die ein bezüglich des ersten Kommunikationsnetzes externes Verbindungsziel (GW2) identifiziert, in eine Transportadresse (IPGW2) zum Transport von Datenpaketen über das weitere Kommunikationsnetz (WAN) ausgestaltet ist, und wobei das Verbindungsziel (GW2) in der Gatewayeinrichtung (GW1) unter der logischen Adressinformation als bezüglich des ersten Kommunikationsnetzes externes Verbindungsziel registrierbar ist,
**dadurch gekennzeichnet,**
**dass** die erste Schnittstelle zum Betrieb in einem gatekeepergesteuerten H.323-Modus und die zweite Schnittstelle zum simultanen Betrieb in einem gatekeeperlosen H.323-Modus ausgestaltet ist.

## Claims

1. Method for establishing a connection from a network-internal terminal (EG1) of a packet-based communication network (LAN1) to a network-external connection destination (GW2) on the basis of ITU-T Recommendation H.323, in which
a) a gateway device (GW1) of the communication network (LAN1) is registered as a network-internal connection destination in a central connection controller (GK1), provided for controlling and managing network-internal connections, of the communication network (LAN1) under logical address information that identifies the network-external connection destination (GW2), and the external connection destination (GW2) is registered as a network-external connection destination in the gateway device (GW1) under this address information,
b) the terminal (EG1) transmits the address information that identifies the network-external connection destination (GW2) to the connection controller (GK1),
c) the connection controller (GK1) determines the gateway device (GW1) as the connection destination on the basis of the transmitted address information,
d) a connection controlled by the connection controller (GK1) is established between the terminal (EG1) and the gateway device (GW1),
e) the terminal (EG1) transmits the address information to the gateway device (GW1),
f) the gateway device (GW1) determines a network-externally valid transport address (IPGW2) which is assigned to the transmitted address information in the gateway device (GW1) and addresses the network-external connection destination (GW2) in a relaying, packet-based communication network (WAN), and
g) the connection is relayed over the relaying communication network (WAN) to the external connection destination (GW2) on the basis of the network-externally valid transport address (IPGW2).

2. Method according to claim 1, **characterized in that** the connection controller (GK1) transmits to the terminal (EG1) a network-internally valid transport address (IPGW1) which is assigned to the transmitted logical address information (030) and addresses the gateway device (GW1), and **in that** the terminal (EG1) initiates the connection to the gateway device (GW1) on the basis of the network-internally valid transport address (IPGW1).

3. Method according to one of the preceding claims, **characterized in that** the gateway device (GW1) registers as a network-internal connection destination with the connection controller (GK1) under the logical address information (030) that identifies the network-external connection destination (GW2).

4. Method according to one of the preceding claims, **characterized in that** the logical address information (030) is transmitted to the network-external connection destination (GW2) over the relaying communication network.

5. Method according to one of the preceding claims, **characterized in that** the gateway device (GW1) simulates to the connection controller (GK1) that it is the destination of the connection to be established.

6. Packet-based communication network (LAN1) having
- a central connection controller (GK1) conforming to ITU-T Recommendation H.323 for controlling and managing network-internal connections and for converting logical address information (111) that identifies network-internal connection destinations (EG1) into network-internally valid transport addresses (IPEG1) for transporting data packets within the communication network (LAN1), and
- a gateway device (GW1) conforming to ITU-T Recommendation H.323 that can be connected to a relaying communication network (WAN) for converting logical address information that identifies network-external connection destinations (GW2) into network-externally valid transport addresses (IPGW2) for transporting data packets over the relaying communication network (WAN),
**characterized**
- **in that** the gateway device (GW1) is registered in the connection controller (GK1) as a network-internal connection destination under logical address information that identifies a network-external connection destination (GW2), and
- **in that** the external connection destination (GW2) is registered in the gateway device (GW1) as a network-external connection destination under said logical address information.

7. Packet-based communication network according to claim 6, **characterized in that** the central connection controller (GK1) is realized by a gatekeeper conforming to ITU-T Recommendation H.323.

8. Packet-based communication network according to claim 6 or 7, **characterized in that** the logical address information (030) comprises a prefix number, service number and/or a terminal directory number.

9. Packet-based communication network according to one of claims 6 to 8, **characterized in that** the network-internally valid and/or the network-externally valid transport addresses (IPEG1, IPGW1, IPGW2, IPEG2) are based on the Internet Protocol.

10. Packet-based communication network according to one of claims 6 to 9, **characterized in that** the gateway device (GW1) has an access control device for rejecting connection requests arriving from the relaying communication network (WAN) whose respective origin is not registered as a network-external connection destination in the gateway device (GW1).

11. Gateway device (GW1) having a first interface conforming to ITU-T Recommendation H.323 to a gatekeeper-controlled, first packet-based communication network (LAN1) and a second interface conforming to the H.323 Recommendation to a second packet-based communication network (WAN), where the gateway device (GW1) is designed to convert logic address information that identifies a connection destination (GW2) which is external to the first communication network into a transport address (IPGW2) for transporting data packets over the further communication network (WAN), and where the connection destination (GW2) can be registered in the gateway device (GW1) as a connection destination which is external to the first communication network under the logical address information,
**characterized**
**in that** the first interface is designed for operation in a gatekeeper-controlled H.323 mode and the second interface is designed for simultaneous operation in a non-gatekeeper H.323 mode.

## Revendications

1. Procédé pour établir une liaison selon la recommandation de ITU-T H.323 depuis un terminal (EG1) interne au réseau d'un réseau de communication (LAN1) orienté paquet avec un objectif de liaison (GW2) externe au réseau, dans lequel
a) un dispositif passerelle (GW1) du réseau de communication (LAN1) est enregistré dans une commande de liaison (GK1) centrale, prévue pour commander et gérer des liaisons internes au réseau, du réseau de communication (LAN1) sous une information d'adresse logique, identifiant l'objectif de liaison (GW2) externe au réseau, en tant qu'objectif de liaison interne au réseau, et l'objectif de liaison (GW2) externe est enregistré dans le dispositif passerelle (GW1) sous cette information d'adresse comme objectif de liaison externe au réseau,
b) l'information d'adresse identifiant l'objectif de liaison (GW2) externe au réseau est transmise par le terminal (EG1) à la commande de liaison (GK1),
c) le dispositif passerelle (GW1) est déterminé en tant qu'objectif de liaison par la commande de liaison (GK1) à l'aide de l'information d'adresse transmise,
d) une liaison, contrôlée par la commande de liaison (GK1), est établie entre le terminal (EG1) et le dispositif passerelle (GW1),
e) l'information d'adresse est transmise au dispositif passerelle (GW1) par le terminal (EG1),
f) une adresse de transport (IPGW2) valable de façon externe au réseau, attribuée à l'information d'adresse transmise dans le dispositif passerelle (GW1), adressant l'objectif de liaison (GW2) externe au réseau dans un réseau de communication (WAN) orienté paquet de transfert, est déterminée par le dispositif passerelle (GW1) et
g) la liaison est établie à l'aide de l'adresse de transport (IPGW2) valable et externe au réseau par le réseau de communication (WAN) de transfert avec l'objectif de liaison (GW2) externe.

2. Procédé selon la revendication 1,
**caractérisé en ce qu'**une adresse de transport (IPGW1) valable de façon interne au réseau, attribuée à l'adresse d'information (030) logique transmise et adressant le dispositif passerelle (GW1) est transmise par la commande de liaison (GK1) au terminal (EG1), et **en ce que** le terminal (EG1) amorce la liaison avec le dispositif passerelle (GW1) à l'aide de l'adresse de transport (IPGW1) valable de façon interne au réseau.

3. Procédé selon l'une quelconque des revendications précédentes, **caractérisé en ce que** le dispositif passerelle (GW1) s'enregistre auprès de la commande de liaison (GK1) sous l'information d'adresse (030) logique, identifiant l'objectif de liaison (GW2) externe au réseau, en tant qu'objectif de liaison interne au réseau.

4. Procédé selon l'une quelconque des revendications précédentes, **caractérisé en ce que** l'information d'adresse (030) logique est transmise par le réseau de communication de transfert à l'objectif de liaison (GW2) externe au réseau.

5. Procédé selon l'une quelconque des revendications précédentes, **caractérisé en ce que** le dispositif passerelle (GW1) simule par rapport à la commande de liaison (GK1) être l'objectif de la liaison à établir.

6. Réseau de communication (LAN1) orienté paquet comprenant
- une commande de liaison (GK1) centrale selon la recommandation de ITU-T H. 323 pour la commande et la gestion de liaisons internes au réseau, et pour la conversion d'informations d'adresse (111) logiques, identifiant des objectifs de liaison (EG1) internes au réseau en adresses de transport (IPEG1) valables de façon interne au réseau pour le transport de paquets de données à l'intérieur du réseau de communication (LAN1), et
- un dispositif passerelle (GW1) pouvant être raccordé à un réseau de communication (WAN) de transfert selon la recommandation de ITU-T H. 323 pour la conversion d'informations d'adresse logiques, identifiant des objectifs de liaison (GW2) externes au réseau en adresses de transport (IPGW2) valables de façon externe au réseau pour le transport de paquets de données par le réseau de communication (WAN) de transfert,
**caractérisé en ce que**
- le dispositif passerelle (GW1) est enregistré dans la commande de liaison (GK1) sous une information d'adresse logique, identifiant un objectif de liaison (GW2) externe au réseau en tant qu'objectif de liaison interne au réseau, et
- **en ce que** l'objectif de liaison (GW2) externe est enregistré dans le dispositif passerelle (GW1) sous cette information d'adresse logique en tant qu'objectif de liaison externe au réseau.

7. Réseau de communication orienté paquet selon la revendication 6,
**caractérisé en ce que**
la commande de liaison (GK1) centrale est réalisée par un Gatekeeper selon la recommandation de ITU-T H. 323.

8. Réseau de communication orienté paquet selon la revendication 6 ou 7,
**caractérisé en ce que**
l'information d'adresse (030) logique comprend un préfixe interurbain, un numéro de service et/ou un numéro d'appel de terminal.

9. Réseau de communication orienté paquet selon l'une quelconque des revendications 6 à 8,
**caractérisé en ce que**
les adresses de transport (IPEG1, IPGW1, IPGW2, IPEG2) valables de façon interne au réseau et/ou valables de façon externe au réseau sont basées sur le protocole Internet.

10. Réseau de communication orienté paquet selon l'une quelconque des revendications 6 à 9,
**caractérisé en ce que**
le dispositif passerelle (GW1) présente un dispositif de contrôle d'accès pour refuser les demandes de liaison arrivant du réseau de communication (WAN) de transfert, demandes dont l'origine respective n'est pas enregistrée dans le dispositif passerelle (GW1) comme objectif de liaison externe au réseau.

11. Dispositif passerelle (GW1) avec une première interface selon la recommandation de ITU-T H. 323 avec un premier réseau de communication (LAN1) orienté paquet, commandé par Gatekeeper, et une seconde interface selon la recommandation de H. 323 avec un second réseau de communication (WAN), orienté paquet, le dispositif passerelle (GW1) étant conçu pour la conversion d'une information d'adresse logique, qui identifie un objectif de liaison (GW1) externe par rapport au premier réseau de communication en une adresse de transport (IPGW2) pour le transport de paquets de données par l'autre réseau de communication (WAN), et l'objectif de liaison (GW2) pouvant être enregistré dans le dispositif passerelle (GW1) sous l'information d'adresse logique en tant qu'objectif de liaison externe par rapport au premier réseau de communication,
**caractérisé en ce que**
la première interface pour l'exploitation est conçue pour l'exploitation dans un mode H. 323 commandé par Gatekeeper et la seconde interface pour l'exploitation simultanée dans un mode H. 323 sans Gatekeeper.
